# EUROPEAN PATENT SPECIFICATION

(11) **EP 3 032 888 B1**
(45) Date of publication and mention of the grant of the patent: **27.02.2019**
(21) Application number: 15190578.3
(22) Date of filing: 30.07.2008
(51) Int. Cl.: H04W 48/18, H04W 48/16, H04W 84/18, H04W 88/06

(54) **CHANNEL SWITCHING METHOD FOR SWITCHING CHANNELS THROUGH WHICH CONTENT DATA IS RECEIVED IN A ZIGBEE NETWORK SYSTEM, AND ZIGBEE NETWORK SYSTEM THEREOF**
KANALSCHALTVERFAHREN ZUM UMSCHALTEN VON KANÄLEN, DURCH DIE INHALTSDATEN IN EINEM ZIPBEE-NETZWERKSYSTEM EMPFANGEN WERDEN, SOWIE ZIPBEE-NETZWERKSYSTEM DAFÜR
PROCÉDÉ DE COMMUTATION DE CANAL POUR COMMUTER DES CANAUX PERMETTANT LA RÉCEPTION DE DONNÉES DE CONTENU DANS UN SYSTÈME DE RÉSEAU ZIGBEE ET SYSTÈME DE RÉSEAU ZIGBEE CORRESPONDANT

(30) Priority: 31.07.2007 KR 20070077202
(43) Date of publication of application: 15.06.2016
(62) Divisional of application: 08161415.8
(73) Proprietor: Samsung Electronics Co., Ltd., Gyeonggi-do 16677 (KR)
(72) Inventor: CHOI, Woo-Jun, Gyeonggi-do 16677 (KR); KIM, Jae-Ho, Gyeonggi-do 16677 (KR); LEE, Jeong-Eun, Gyeonggi-do 16677 (KR); HAN, Young-Seop, Gyeonggi-do 16677 (KR); SIM, Dae-Hyun, Gyeonggi-do 16677 (KR)
(74) Representative: HGF Limited

(56) References cited:
- EP-A1- 1 739 894
- WO-A2-03/081373
- "IEEE Standard for Information TechnologyTelecommunications and Information Exchange Between SystemsLocal and Metropolitan Area NetworksSpecific Requirements Part 15.4: Wireless Medium Access Control (MAC) and Physical Layer (PHY) Specifications for Low-Rate Wireless Personal Area Networks (WPANs);IE", IEEE STD 802.15.4-2006 (REVISION OF IEEE STD 802.15.4-2003) - IEEE STANDARD FOR INFORMATION TECHNOLOGY- TELECOMMUNICATIONS AND INFORMATION EXCHANGE BETWEEN SYSTEMS- LOCAL AND METROPOLITAN AREA NETWORKS- SPECIFIC REQUIREMENTS, IEEE COMPUTER SOCIETY, N, 1 January 2006 (2006-01-01), pages _1-305, XP017603909, ISBN: 978-0-7381-4996-7

## Description

### BACKGROUND OF THE INVENTION

### 1. Field of the Invention

The present invention relates generally to a channel switching method, and more particularly, to a method for switching channels through which content data is received in a ZigBee network system, and a ZigBee network system thereof.

### 2. Description of the Related Art

A Wireless Personal Area Network (WPAN) is a legacy Personal Area Network (PAN) realized in a wireless manner. In a PAN, unlike in the well-known Local Area Network (LAN) or Wireless Local Area Network (WLAN), each person has his/her own unique network. For example, each device possessed by one person forms one network for the person's convenience.

A mobile communication terminal can connect with a headset using ZigBee communication, which is a kind of PAN, and can control the connected headset to transmit and reproduce multimedia data.

When a PAN is broadcasting multimedia data in a public mode, the headset can receive the multimedia data broadcasted from the PAN without a separate authentication procedure. However, the headset cannot receive multimedia data without undergoing the authentication procedure when the PAN is in a private mode. While the mobile communication terminal can simply process the complex authentication procedure with the PAN, the headset has difficulty carrying out the calculation necessary for the authentication procedure since it has a simple structure compared with the mobile communication terminal. Thus, the headset should be connected to the mobile communication terminal in the private mode where the authentication procedure is essential. When the mobile communication terminal completes the authentication procedure with the PAN, the headset receives and reproduces the data broadcasted from the PAN through the mobile communication terminal.

However, if the mobile communication terminal closes the connection with the old PAN to access (or join with) another PAN, the connection between the headset and the PAN is also disconnected. This is particularly true in the private mode. Since the headset's authentication with the PAN has already been completed through the mobile communication terminal, if the connection between the mobile communication terminal and the PAN is closed, the connection is closed as the headset cannot process the authentication procedure with the PAN. In addition, if the headset is not connected to the mobile communication terminal, it cannot perform its call function, causing inconvenience to the user.

Therefore, it is preferable for the headset to be reconnected to the mobile communication terminal that has moved to another PAN. To this end, the headset accesses all channels registered in the ZigBee network. The headset transmits a Join Request (or Connect Request) to all terminals connected to each PAN that it has accessed, and if a specific mobile communication terminal grants (confirms) the Join Request, the headset determines that the mobile communication terminal has accessed the corresponding PAN.

For example, if it is assumed that the frequency band where the ZigBee network is formed is 2.4 GHz and a total of 16 channels CH.11∼CH.26 are formed, the headset whose connection to the mobile communication terminal is closed cannot determine to which channel or PAN the mobile communication terminal has accessed. The headset accesses the channels in turn starting from the first channel, and transmits a Join Request to all terminals in the accessed channel to thereby check whether the mobile communication terminal has joined in the corresponding channel. Even for the same channel, multiple PANs having different PAN Identifications (IDs) may exist in the channel, so the headset should access all channels and PANs to check whether the mobile communication terminal has accessed the corresponding channels and PANs.

In this way, the headset should access all channels and PANs of the ZigBee network to check the mobile communication terminal's access/non-access thereto every time the mobile communication terminal switches its PAN, increasing the time required in a reconnection process. The increase in the reconnection time causes an increase in the time for which the headset cannot receive multimedia data from the mobile communication terminal. Accordingly, the user may not reproduce the multimedia data in the reconnection process for a long time, causing much inconvenience.

Therefore, there is a demand for a mobile communication terminal that does not need a long time for reconnection between the headset and the mobile communication terminal, and can conveniently reproduce the multimedia data.

EP-1739894-A1 discloses a method for performing a handover in a mesh network which comprises: performing a handover for a plurality of nodes of said mesh network form a first access point to a second access point, said plurality of nodes forming a tree of nodes, said tree comprising a root node and one or more further nodes connected to said root node either directly or via intermediate nodes, and said handover being performed for said tree of nodes in a coordinated fashion.

WO-03/081373-A2 discloses a for giving a user rapid notice of Bluetooth devices within communication range, and yet selectively blocking any notice about Bluetooth devices that the user wishes to ignore. Bluetooth server devices can indicate to the user s Bluetooth client device the service the server device has available by sending service/device icon information to Bluetooth client device. This information can be a value in the class-of-device (CoD) field of a frequency hop synchronization (FHS) packet that it sends during the process of exchanging inquiry and paging packets with the Bluetooth client device. If the server device has begun by transmitting an inquiry packet, then the CoD value will be sent in its paging packet. If the server device is responding to an inquiry, then its CoD value will be in its inquiry response packet.

### SUMMARY OF THE INVENTION

The present invention is to address at least the above problems and/or disadvantages and to provide at least the advantages described below.

The invention is defined in the independent claims 1 and 8. Embodiments of the invention are defined in the dependent claims. The embodiments and/or examples of the following description which are not covered by the appended claims are considered as not being part of the present invention.

Accordingly, an aspect of the present invention provides a channel switching method for switching channels through which content data is received in a ZigBee network system capable of reducing the time for which the headset is reconnected to the mobile communication terminal, and a ZigBee network system thereof.

According to a first aspect of the present invention there is provided a method of a mobile communication terminal, the method comprising: monitoring a plurality of Personal Area Networks, PANs, in a network system to perform short-range communication, and selecting at least one PAN according to the monitoring; generating channel information for the selected PAN and terminal address information including an address of the mobile communication terminal; transmitting the generated channel information to a peripheral device; connecting with the selected PAN; and receiving from the peripheral device a join request message, including the address of the mobile communication terminal, in the selected PAN.

According to a second aspect of the present invention there is provided a mobile communication terminal comprising: a communication module; and a controller configured to: monitor a plurality of Personal Area Networks, PANs, in a network system to perform short-range communication, select at least one PAN according to the monitoring, generate channel information for the selected PAN and terminal address information including an address of the mobile communication terminal, control the communication module to transmit the generated channel information to a peripheral device and to connect with the selected PAN, and control the communication module to receive from the peripheral device a join request message, including the address of the mobile communication terminal, in the selected PAN.

### BRIEF DESCRIPTION OF THE DRAWINGS

The above and other aspects, features and advantages of the present invention will become more apparent from the following detailed description when taken in conjunction with the accompanying drawings in which:
FIG. 1 is a diagram illustrating a ZigBee network system according to an embodiment of the present invention;
FIG. 2 is a block diagram illustrating a schematic structure of a mobile communication terminal in a ZigBee network system according to an embodiment of the present invention;
FIG. 3 is a signaling diagram illustrating a channel switching method in a ZigBee network system according to an embodiment of the present invention;
FIG. 4 is a flowchart illustrating a channel switching method of a mobile communication terminal in a ZigBee network system according to an embodiment of the present invention;
FIG. 5 is a flowchart illustrating a channel switching method of a headset in a ZigBee network system according to an embodiment of the present invention;
FIG. 6 is a flowchart illustrating a method for resuming a connection between a headset and a mobile communication terminal in a ZigBee network system according to an embodiment of the present invention; and
FIG. 7 is a diagram illustrating the PAN search result in a ZigBee network according to an embodiment of the present invention.

### DETAILED DESCRIPTION OF PREFERRED EMBODIMENTS

Preferred embodiments of the present invention are described in detail with reference to the accompanying drawings. Similar components are designated by similar reference numerals although they are illustrated in different drawings. Detailed descriptions of constructions or processes known in the art may be omitted to avoid obscuring the subject matter of the present invention.

Herein, a PAN that a mobile communication terminal was accessing (joining in) before it switches the PAN will be referred to as a 'first PAN', while a PAN that the mobile communication terminal has newly accessed after closing the connection with the first PAN will be referred to as a 'second PAN'. In addition, a communication network including at least one PAN, which is an upper concept of PAN, is called 'switched channel'. Particularly, when the mobile communication terminal switches its accessed PAN from the first PAN to the second PAN, the channel switched due to the switching of the PAN will be referred to herein as a 'switched channel'. As a specific example, if the first PAN is included in CH.12 and the second PAN is included in CH.14, the switched channel is CH.14.

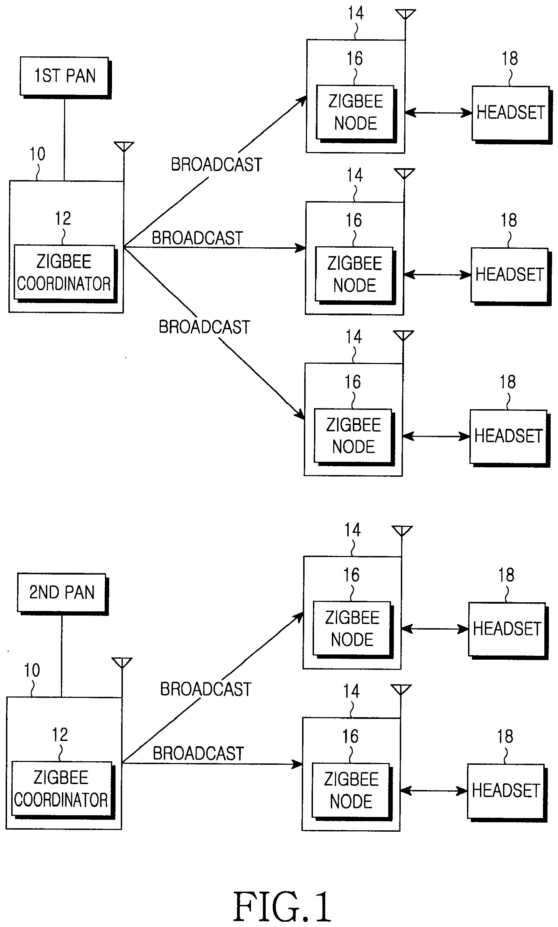

FIG. 1 is a diagram illustrating a ZigBee network system according to an embodiment of the present invention.

A first PAN and a second PAN, and mobile communication terminals 10 and 14 connected to each PAN are shown in the drawing. Among the mobile communication terminals, a mobile communication terminal including a ZigBee communication module serving as a ZigBee coordinator 12 will be referred to as a 'coordinator terminal 10', and a mobile communication terminal including a ZigBee communication module serving as a ZigBee node 16 will be referred to as a 'node terminal 14'. The coordinator terminal 10 forms a Personal Area Network, i.e., PAN, that broadcasts content data, or forms a channel including at least one PAN, and broadcasts content data to the node terminal 14 that has entered the corresponding PAN or channel. The content data broadcasted from the coordinator terminal 10 is multimedia data that can undergo streaming, such as, for example, MPEG Audio Layer-3 (MP3), Moving Picture Experts Group (MPEG), etc.

The node terminal 14 that receives the content data broadcasted in the corresponding PAN is connected to the first PAN or second PAN formed by the coordinator terminals 10. The node terminals 14 each select and access any one of the PANs or channels formed by its associated coordinator terminal 10 in the ZigBee network, and receive the content data broadcasted from the coordinator terminal 10. The node terminals 14 each transmit the received content data to its associated headset 18, and the headset 18 reproduces the content data received through the node terminal 14.

According to another embodiment of the present invention, since the headset 18 includes a ZigBee communication module separate from that of the mobile communication terminal, it can perform ZigBee communication with the coordinator terminal 10. Since the headset 18 is capable of ZigBee communication, it can directly receive content data from the coordinator terminal 10 without passing through the node terminal 14, and reproduce the received content data.

The ZigBee communication module may previously have information on the PAN or channel that can be formed in the ZigBee network, or can be provided with information on the formed PAN or channel from the ZigBee network. Therefore, the headset 18 capable of ZigBee communication, like the node terminal 14, can directly access the PAN or channel and receive content data there from.

In particular, when the PAN is in the public mode, since the headset 18 has no need for the authentication procedure, it can receive the content data broadcasted from the coordinator terminal 10 by simply accessing the PAN, unlike in the private mode. In addition, the headset 18 can directly convert the content data received from the PAN or channel by encoding/decoding the content data, and reproduce the converted content data.

Although the device connected to the node terminal 14 is limited herein to the headset 18, by way of example, the device connected to the node terminal 14 should not necessarily be limited to the headset. All devices capable of ZigBee communication, including a ZigBee communication module therein, such as printer and Personal Digital Assistance (PDA) as well as the headset, can be connected to the node terminal 14 to receive content data therefrom.

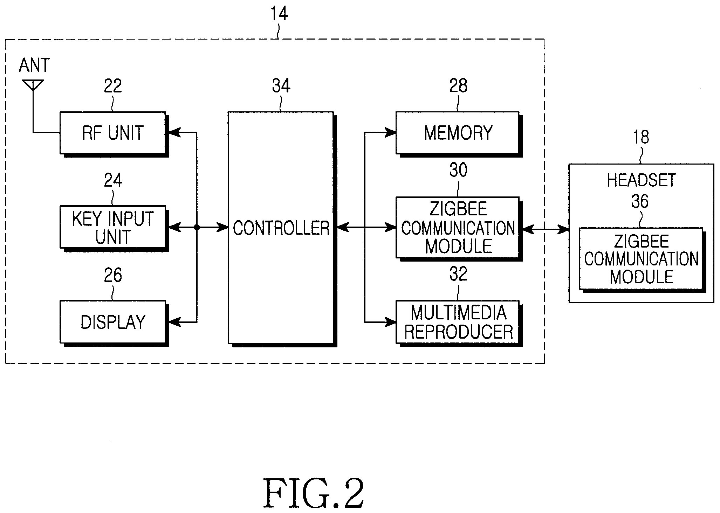

FIG. 2 is a block diagram illustrating a schematic structure of a mobile communication terminal in a ZigBee network system according to an embodiment of the present invention.

A mobile communication terminal 14 according to an embodiment of the present invention includes a Radio Frequency (RF) unit 22, a key input unit 24, a display 26, a memory 28, a ZigBee communication module 30, a multimedia reproducer 32, a channel information generator 38, and a controller 34. The mobile communication terminal 14, connected to a headset 18 including a ZigBee communication module 36, performs short-range communication.

The RF unit 22 performs a wireless communication function of the mobile communication terminal 14. The RF unit 22 includes an RF transmitter (not shown) for frequency-up-converting and amplifying a transmission signal, and an RF receiver (not shown) for low-noise-amplifying and frequency-down-converting a received signal.

The key input unit 24 includes keys by which the terminal 14 can receive numerical and character inputs, and keys used for setting various functions. The key input unit 24 receives inputs from the user. If the controller 34 searches PANs in the ZigBee network, the key input unit 24, according to an embodiment of the present invention, can receive a user input for selecting any one of the searched PANs.

The display 26, which can be made up of a Liquid Crystal Display (LCD), outputs various display data generated by the mobile communication terminal 14. When the LCD is realized in a touch screen manner, the display 26 can serve even as an input means.

According to an embodiment of the present invention, the display 26 can display the PAN search result in the ZigBee network, under the control of the controller 34. In addition, the display 26 can display information on the content data reproduced in the headset 18. For example, if the content data is a music file, the display 26 displays the title, singer, album name, etc.

The memory 28 can be composed of a program memory and a data memory. The memory 28 stores therein a variety of information necessary for controlling an operation of the mobile communication terminal 14. The memory 28 according to an embodiment of the present invention, under the control of the controller 34, can store content data reproduced by the headset 18, and can also store channel information for each PAN formed in the ZigBee network.

The channel information includes a channel number of a switched channel in which a second PAN selected by the mobile communication terminal 14 among the PANs searched by the mobile communication terminal 14 is included, and a PAN ID of the second PAN. Further, the channel information can include configuration information containing a beacon period of the second PAN, used for allowing the headset 18 to readily access the second PAN.

The coordinator terminal 10 can form a different communication network according to the PAN ID. For example, a communication network with a channel number "13" and a PAN ID "ID_113" and a communication network with a channel number "13" and a PAN ID "ID 256" are different communication networks though they exist in the same channel. That is, the coordinator terminal 10 having its own unique PAN ID can form a communication network "PAN" corresponding to a lower concept of the channel in the same channel. Therefore, switching of the PAN connected to the mobile communication terminal 14 means switching of a channel number and a PAN ID. The channel information includes both the channel number and the PAN ID to correctly notify the headset 18 of the second PAN that the mobile communication terminal 14 has accessed.

The ZigBee communication module 30 is a communication module for performing ZigBee communication. According to an embodiment of the present invention, since the mobile communication terminal 14 includes the ZigBee communication module 30, it can serve as the ZigBee coordinator 12 or the ZigBee node 16 in the ZigBee network.

Referring back to FIG. 1, the mobile communication terminal 10 serving as the ZigBee coordinator 12 forms a PAN, which is a LAN, and broadcasts content data to the formed PAN. The mobile communication terminal 14 serving as the ZigBee node 16 accesses the PAN or channel formed by the ZigBee coordinator 12, and receives content data broadcasted from the ZigBee coordinator 12.

The multimedia reproducer 32 reproduces multimedia data in the content data broadcasted from the coordinator terminal 10 or previously stored in the memory 28.

According to an embodiment of the present invention, the multimedia reproducer 32 can encode/decode the multimedia data received from the coordinator terminal 10. The multimedia data encoded/decoded by the multimedia reproducer 32 can be transmitted to the headset 18 by means of the ZigBee communication module 30 and then reproduced.

The channel information generator 38 generates channel information under the control of the controller 34. When a user input for selecting one of the searched PANs is selected by means of the key input unit 24, the channel information generator 38 generates channel information for the selected PAN. Also, the channel information generator 38 can generate terminal information. Before the node terminal 14 moves from the current PAN to a new PAN, the channel information generator 38, under the control of the controller 34, can generate channel information or terminal information for the new PAN.

According to another embodiment of the present invention, when terminal information for the node terminal 14 is previously stored in the memory 28, the channel information generator 38 generates only the channel information.

The controller 34 controls the overall operation of the mobile communication terminal 14. According to an embodiment of the present invention the controller 34 controls the mobile communication terminal 14 to receive the content data broadcasted from the PAN formed by the coordinator terminal 10. The controller 34 searches for PANs existing in the ZigBee network, when it intends to switch the PAN from which it receives content data. The controller 34 controls the display 26 to display the PAN search result, and can receive a user input for selecting any one of the displayed PANs by means of the key input unit 24.

Before closing the connection to the first PAN to connect with the second PAN, the controller 34 transmits channel information for the second PAN to the headset 18.

The headset 18 can determine to which PAN the mobile communication terminal 14 will connect, based on the channel information received from the mobile communication terminal 14. When the connection between the first PAN and the mobile communication terminal 14 is closed, the headset 18 can easily find out the second PAN to which the mobile communication terminal 14 has connected, by accessing the PAN having a channel number and a PAN ID included in the channel information. Therefore, according to the present invention, the headset 18 has no need to access all channels in the ZigBee network and re-access every PAN included in each channel to determine the presence/absence of the mobile communication terminal 14 that should be connected to the headset 18, on a one-by-one basis.

After transmitting the channel information to the headset 18, the controller 34 closes the connection with the first PAN, and accesses the second PAN. When the headset 18 accesses the second PAN and sends a Join Request (or Connect Request), the controller 34 reconnects with the headset 18 and transmits content data of the second PAN to the headset 18.

The headset 18, which includes the ZigBee communication module 36 for ZigBee communication, receives the content data broadcasted from the first coordinator of the first PAN or the second coordinator of the second PAN through the mobile communication terminal 14, and reproduces the received content data.

According to an embodiment of the present invention, the headset 18 receives the channel information for the second PAN before the mobile communication terminal 14 switches from the first PAN to the second PAN. When the connection between the first PAN and the mobile communication terminal 14 is closed, the connection between the first PAN and the headset 18, which was receiving content data through the mobile communication terminal 14, is closed. Therefore, the headset 18 terminates its reproduction of the content data from the first PAN. When the connection between the mobile communication terminal 14 and the first PAN is closed, the headset 18 which was connected to the first PAN via the mobile communication terminal 14 detects the close of the connection between the first PAN and the mobile communication terminal 14. The headset 18 can detect the closed connection between the first PAN and the mobile communication terminal 14 because as the mobile communication terminal 14 which was serving as a router of the headset 18 leaves the first PAN, the headset 18 also leaves the first PAN.

According to another embodiment of the present invention, when the mobile communication terminal 14 was transmitting content data to the headset 18, a coordinator of the first PAN is the mobile communication terminal 14. In the ZigBee network, the mobile communication terminal 14 cannot simultaneously serve as a coordinator and a node. Therefore, the mobile communication terminal 14, which was serving as the coordinator, should remove its formed first PAN in order to access another channel. Since the mobile communication terminal 14, which was serving as the coordinator, has removed the PAN, the headset 18, which was connected to the mobile communication terminal 14, cannot receive the content data transmitted from the mobile communication terminal 14. In addition, since the first PAN will be removed, the connection between the headset 18 and the first PAN is also automatically closed.

According to another embodiment of the present invention, even when the mobile communication terminal 14 directly sends a connection close (or join close) command to the headset 18, the connection between the headset 18 and the mobile communication terminal 14 is disconnected.

The headset 18 accesses the second PAN based on the channel information. The channel information includes a channel number of the switched channel in which the second PAN is included, and a PAN ID of the second PAN. Before switching the PAN, the mobile communication terminal 14 can transmit the channel information to the headset 18 to previously notify that it will soon connect with the second PAN after closing the connection to the first PAN.

Upon detecting the close of the connection between the mobile communication terminal 14 and the first PAN, the headset 18 determines, as a second PAN, the PAN whose channel number and PAN ID are equal to the channel number and the PAN ID included in the channel information, among the PANs registered in the ZigBee network. The headset 18 then accesses the second PAN. In this case, the headset 18 has already stored information on all the channels or PANs registered in the ZigBee network.

The headset 18, after accessing the second PAN, sends a Join Request to the mobile communication terminal 14 based on the terminal information for the mobile communication terminal 14, and resumes the connection with the mobile communication terminal 14. The terminal information on the mobile communication terminal 14, includes a 64-bit address of the mobile communication terminal 14. The terminal information can be transmitted from the mobile communication terminal 14 along with the channel information, or can be a value previously stored by the headset 18. Each mobile communication terminal 14 has a 64-bit address as its own unique value. Therefore, the headset 18 can identify a desired mobile communication terminal 14 among the mobile communication terminals joined in the PAN or channel, using the 64-bit address of the terminal information.

The headset 18 accesses the second PAN, transmits a Join Request message to the mobile communication terminal 14 having a 64-bit address being equal to the 64-bit address included in the terminal information, and receives a Join Confirm (or Connect Grant) message in response to the Join Request, making it possible to reconnect with the mobile communication terminal 14.

According to another embodiment of the present invention, the headset 18 can broadcast the 64-bit address of terminal information to all terminals joined in the second PAN along with the Join Request message, and wait for a Join Confirm message from the mobile communication terminal 14 for a predetermined time. Among the terminals receiving the broadcasted Join Request message, the mobile communication terminal 14 that should be reconnected to the headset 18 transmits a Join Confirm message to the headset 18, thereby resuming the connection with the headset 18.

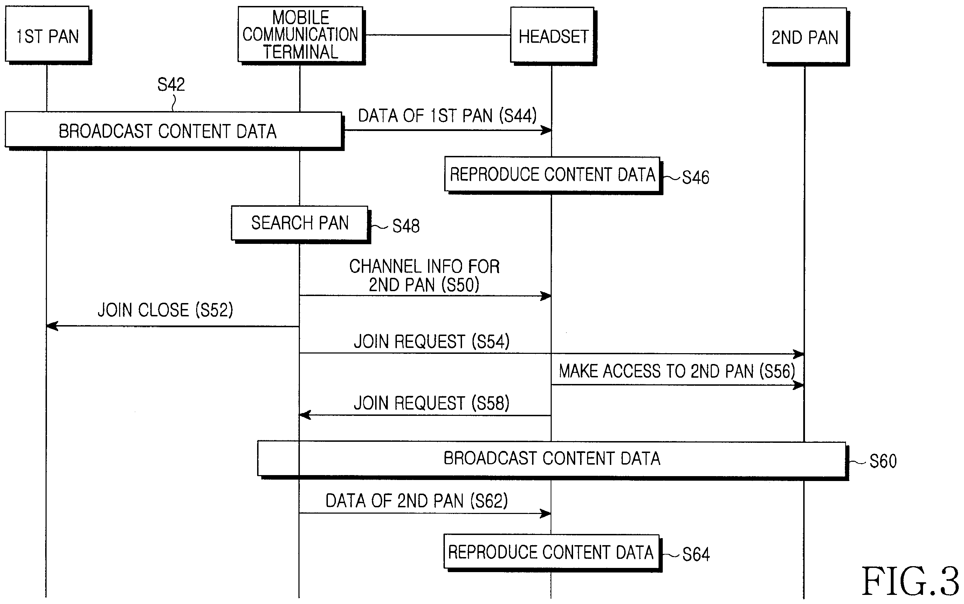

FIG. 3 is a signaling diagram illustrating a content data transmission/reception method in a ZigBee network system according to an embodiment of the present invention.

It is assumed in the drawing that a mobile communication terminal 14 is previously connected to a first PAN, and a headset 18 receives content data broadcasted from the first PAN through the mobile communication terminal 14 and reproduces the received content data.

A first coordinator, which has formed the first PAN, broadcasts content data (Step S42), and the mobile communication terminal 14 receives the content data broadcasted from the first PAN and transmits the received content data to the headset 18 (Step S44). The headset 18 reproduces the content data received through the mobile communication terminal 14 (Step S46).

The mobile communication terminal 14, when it intends to switch the PAN from which it receives broadcast data, searches for PANs in the ZigBee network (Step S48).

The mobile communication terminal 14 selects a second PAN through a user input, and transmits channel information for the second PAN to the headset 18 (Step S50).

To access the second PAN, the mobile communication terminal 14 closes the connection with (or the join with) the first PAN (Step S52), and sends a Join Request to the second PAN (Step S54). The headset 18 accesses the second PAN based on the channel information (Step S56), and sends a Join Request to the mobile communication terminal 14 (Step S58). The headset 18 accesses the second PAN by accessing the PAN whose channel number and PAN ID are identical to the channel number and PAN ID included in the channel information among the PANs registered in the ZigBee network.

A second coordinator, which has formed the second PAN, broadcasts content data to the second PAN (Step S60), and the mobile communication terminal 14 receives the content data broadcasted from the second PAN and transmits the received content data to the headset 18 (Step S62). The headset 18 reproduces the content data received from the second PAN through the mobile communication terminal 14 (Step S64).

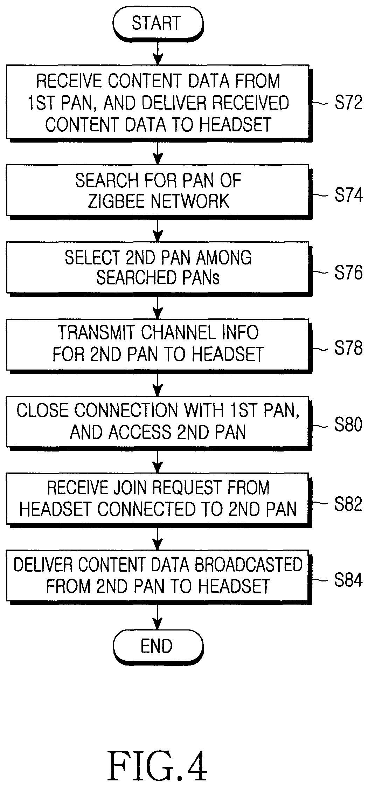

FIG. 4 is a flowchart illustrating a content data transmission/reception method of a mobile communication terminal in a ZigBee network system according to an embodiment of the present invention.

It is assumed in the drawing that the mobile communication terminal 14 has already connected with the first PAN. The mobile communication terminal 14 receives content data broadcasted from the first PAN, and delivers the received content data to the headset 18 in Step S72. The headset 18 reproduces the content data transmitted through the mobile communication terminal 14.

When it is desires to switch the PAN from which the mobile communication terminal 14 receives broadcast, searches for PANs in the ZigBee network in Step S74, and selects a second PAN from among the searched PANs in Step S76.

The mobile communication terminal 14 can search for all PANs that broadcast the content data using the ZigBee communication module 30 in its current position. The selection of the PAN can be achieved through a user input.

According to an embodiment of the present invention, the mobile communication terminal 14 can stop the transmission of the content data to the headset 18 to search for PANs. The ZigBee communication scheme is a low-power communication scheme, and in this scheme, the amount of communication between the PAN and the mobile communication terminal 14 is not great. When the mobile communication terminal 14 simultaneously performs the PAN search and the data transmission, its communication increases causing a possible overload. In addition, due to an increase in the amount of communication allocated to the mobile communication terminal 14, data interruption may happen when the mobile communication terminal 14 transmits content data to the headset 18. Therefore, the mobile communication terminal 14 stops the data transmission to the headset 18 to perform smooth communication.

After selecting the second PAN in Step S76, the mobile communication terminal 14 transmits channel information for the second PAN to the headset 18 in Step S78.

The channel information that the mobile communication terminal 14 transmits to the headset 18 is information indicating that the mobile communication terminal 14 will soon connect with the second PAN after closing the connection with the first PAN, and the channel information includes a channel number of the switched channel in which the second PAN is included, and a PAN ID of the second PAN. According to an embodiment of the present invention, the channel information can include configuration information containing a beacon period of the second PAN so that the headset 18 can easily access the second PAN. Upon receiving the channel information from the mobile communication terminal 14, the headset 18 can perceive the PAN that the mobile communication terminal 14 will access after closing its connection with the first PAN. In addition, the headset 18 can simply find out the PAN to which the mobile communication terminal 14 has connected, using the channel information. As a result, it is possible to reduce the time required for finding out the PAN that the mobile communication terminal 14 has accessed.

The mobile communication terminal 14 closes its connection with the first PAN and then accesses the second PAN in Step S80. When the mobile communication terminal 14 closes the connection with the first PAN, the headset 18, which was receiving content data of the first PAN through the mobile communication terminal 14, also closes its connection to the first PAN, so it cannot reproduce the content data of the first PAN.

According to an embodiment of the present invention, the mobile communication terminal 14 can transmit a connection close command to the headset 18 to close the connection between the headset 18 and the first PAN. The mobile communication terminal 14 can transmit in Step S78 the connection close command to the headset 18 along with the channel information to notify the headset 18 of the switching of the PAN.

After accessing the second PAN in Step S80, the mobile communication terminal 14 maintains its connection to the second PAN, and when the headset 18 accesses the second PAN, the mobile communication terminal 14 receives a Join Request from the headset 18 that has accessed the second PAN in Step S82. When the mobile communication terminal 14 receives the Join Request from the headset 18 in Step S82, the connection between the headset 18 and the mobile communication terminal 14 is resumed. Upon receipt of the Join Request from the headset 18, the mobile communication terminal 14 can transmit a Join Confirm message to the headset 18 to resume the connection with the headset 18.

After the connection of the mobile communication terminal 14 with the headset 18 is resumed in step S82, the mobile communication terminal 14 delivers the content data of the second PAN to the headset 18 (Step S84). The headset 18 receives the content data of the second PAN through the mobile communication terminal 14 and reproduces the received content data.

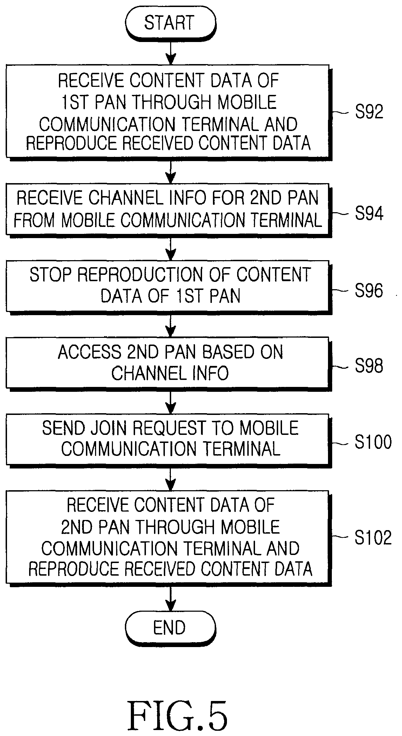

FIG. 5 is a flowchart illustrating a content data transmission/reception method of a headset in a ZigBee network system according to an embodiment of the present invention.

It is assumed in the drawing that the mobile communication terminal 14 has accessed the first PAN, and transmits the content data broadcasted from the first PAN to the headset 18.

The headset 18 receives content data of the first PAN through the mobile communication terminal 14 and reproduces the received content data in Step S92. In the meantime, if the mobile communication terminal 14 intends to switch the PAN, it stops the data transmission to the headset 18 to smoothly search for PANs in the ZigBee network..

When the mobile communication terminal 14 wishes to switch the content data from the first PAN to the second PAN, the headset 18 receives channel information for the second PAN from the mobile communication terminal 14 in Step S94. Then the headset 18 stops the reproduction of the content data broadcasted from the first channel in Step S96. The channel information can include therein a channel number of the switched channel in which the second PAN is included, and a PAN ID of the second PAN.

Thereafter, the mobile communication terminal 14 closes the connection to the first PAN. The headset 18, whose connection to both the mobile communication terminal 14 and the first PAN is closed, should be reconnected to the mobile communication terminal 14. This is due to the fact that when a PAN is broadcasting content data in the private mode, the mobile communication terminal 14 or the headset 18 that has accessed the PAN cannot receive the broadcasted content data unless it undergoes a specific authentication procedure.

The mobile communication terminal 14 can simply process the authentication procedure. However, the headset 18 has difficulty in processing the authentication procedure with the PAN since it has a simple structure compared with the mobile communication terminal 14. Therefore, in the case where the PAN is in the private mode, the headset 18 accesses the PAN via the mobile communication terminal 14 and processes the authentication procedure. When the connection between the mobile communication terminal 14 and the PAN is closed, even the connection between the PAN and the headset 18, which was connected thereto through the mobile communication terminal 14 in the private mode, is also automatically disconnected. In the private mode, the headset 18 should be reconnected to the mobile communication terminal 14 to process the authentication procedure.

Even through there is no need for the authentication procedure as the PAN is in the public mode, the headset 18 should resume the connection with the mobile communication terminal 14. The headset 18 can perform a call function in addition to the content data reproduction function, and the headset 18 cannot perform the call function unless it is connected to the mobile communication terminal 14. Therefore, in the ZigBee network system according to an embodiment of the present invention, even when the headset 18 directly accesses the PAN and receives content data therefrom, it should keep the connection to the mobile communication terminal 10.

After transmitting the channel information to the headset 18, the mobile communication terminal 14 accesses the second PAN. Since the mobile communication terminal 14 has accessed the second PAN, the headset 18 should access the second PAN and reconnect with the mobile communication terminal 14.

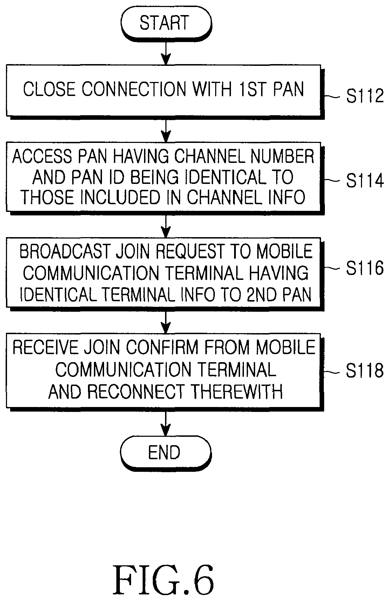

The headset 18 accesses the second PAN based on the channel information received in Step S96 in Step S98. The method in which the headset 18 resumes the connection with the mobile communication terminal 14 connected to the second PAN in the ZigBee network will be described in detail with reference to FIG. 6.

The headset 18, which has accessed the second channel, sends a Join Request to the mobile communication terminal 14 joined in the second PAN (Step S100). When the connection to the mobile communication terminal 14 is resumed, the headset 18 receives content data of the second PAN through the mobile communication terminal 14, and reproduces the received content data in Step S102.

According to another embodiment of the present invention, when the second PAN is in the public mode, the headset 18 can directly access the second PAN, receive content data therefrom, and reproduce the received content data.

FIG. 6 is a flowchart illustrating a method for resuming a connection between a headset and a mobile communication terminal in a ZigBee network system according to an embodiment of the present invention.

When the mobile communication terminal 14 closes its connection to the first PAN, the headset 18 also closes its connection with the first PAN in Step S112. Before closing the connection with the first PAN, the mobile communication terminal 14 transmits the channel information to the headset for the second PAN to which it will soon connect. The mobile communication terminal 14 transmits the channel information to the headset 18 on a unicast basis, and the transmitted channel information includes a channel number of the switched channel in which the second PAN is included, and a PAN ID of the second PAN. The term 'unicast' as used herein refers to a communication scheme for transmitting a data packet only to a particular recipient.

The headset 18, before Step S112, receives the channel information from the mobile communication terminal 14. The headset 18 accesses the PAN whose channel information is equal to the channel information received from the mobile communication terminal 14 in Step S114. To this end, the headset 18 transmits to a coordinator of the second PAN a Join Request targeting the second PAN having the channel number and PAN ID included in the channel information. When the coordinator sends a response to the Join Request to the headset 18 within a predetermined time, the headset 18 is granted to access the second PAN, and otherwise, the headset 18 is granted to do so.

Upon an access to the second PAN, the headset 18 broadcasts a Join Request to the mobile communication terminal whose terminal information is identical to the previously stored terminal information in Step S116.

According to another embodiment of the present invention, the channel information can further include terminal information containing a 64-bit address of the mobile communication terminal 14, together with the channel number of the switched channel and the PAN ID of the second PAN. The channel information including the terminal information is transmitted to the headset 18 before the mobile communication terminal 14 closes its connection with the first PAN.

The mobile communication terminals 14 each have a different 64-bit address, so the 64-bit address is a unique value of the mobile communication terminal 14. Therefore, the headset 18 can store therein the 64-bit address of the mobile communication terminal 14 to thereby identify the mobile communication terminal 14 that should resume the connection with the headset 18.

The headset 18 sends a Join Request to the mobile communication terminal 14 having a 64-bit address included in the terminal information among the 64-bit addresses of the mobile communication terminals connected to the second PAN, i.e., among the mobile communication terminals connected to the second PAN. The mobile communication terminal 14 receives the Join Request from the headset 18 and resumes its connection thereto.

The headset 18 can transmit the Join Request to the mobile communication terminal 14 by broadcasting a Join Request message including a 64-bit address to the second PAN having a PAN ID included in the channel information. At least one terminal is connected to the second PAN accessed by the headset 18. The at least one terminal includes the mobile communication terminal 14 that should resume the connection thereto. Upon receipt of the Join Request message, each terminal compares the 64-bit address included in the message with its own 64-bit address, and transmits a Join Confirm message to the headset 18 if they are identical to each other. Therefore, only the mobile communication terminal 14 that should be connected to the headset 18 responds to the Join Request from the headset 18.

Upon receiving the Join Confirm from the mobile communication terminal 14, the headset 18 connects with the mobile communication terminal 14 (Step S118).

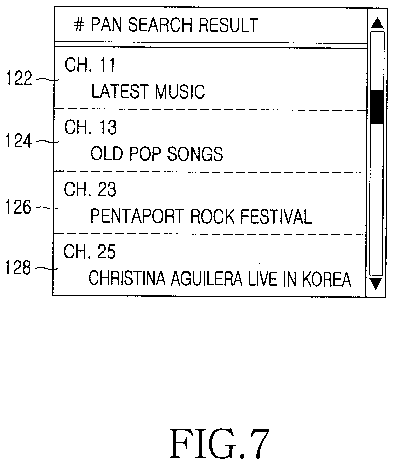

FIG. 7 is a diagram illustrating the PAN search result in a ZigBee network according to an embodiment of the present invention.

The mobile communication terminal 14 can search for PANs in the ZigBee network, and display the search result on the display 26 of the mobile communication terminal 14. The mobile communication terminal 14 can select any one of the searched PANs in response to the user input received.

Shown in the drawing are 4 PANs 122, 124, 126 and 128 given as a result of the PAN search. In the drawing, a channel number and a PAN ID of each PAN are shown in the manner of "Channel Number/PAN ID."

'Latest Music', 'Old Pop Songs', 'Pentaport Rock Festival' and 'Christina Aguilera Live in Korea' are broadcasted on CH. 11/3 122, CH. 13/1 124, CH. 23/2 126 and CH. 25/4 128, respectively. The user selects/inputs his/her desired one of the displayed PANs by means of the key input unit 24.

For example, if the mobile communication terminal 14, while receiving the broadcasted content data after being connected to CH. 11/3 122, receives a user input for selecting CH. 25/4 126 by means of the key input unit 24, it transmits channel information for CH. 25/4 126 to the headset 18 and then closes the connection with CH. 11/3 122.

As apparent from the foregoing description, the present invention provides a channel switching method for switching channels through which content data is received in a ZigBee network system capable of reducing the time for which the headset is reconnected to the mobile communication terminal, and a ZigBee network system thereof.

According to an embodiment of the present invention, the mobile communication terminal can transmit channel information for the old PAN to the headset before switching to a new PAN, thereby allowing the headset to readily find out the new PAN.

According to another embodiment of the present invention, the headset can simply find out the new PAN accessed by the mobile communication terminal based on the channel information received from the mobile communication terminal, thereby reducing the time required for finding out the PAN that the mobile communication terminal has accessed.

According to a further embodiment of the present invention, the headset can reduce the time required for finding out the PAN that the mobile communication terminal has accessed, thereby reducing the time for which the reproduction of the content data broadcasted from the PAN is halted, and thus accommodating the user.

While the invention has been shown and described with reference to a certain preferred embodiment thereof, it will be understood by those skilled in the art that various changes in form and details may be made therein without departing from the scope of the invention as defined by the appended claims.

## Claims

1. A method in a mobile communication terminal (14) serving as a node terminal in a Personal Area Network, PAN, the method comprising:
monitoring (S74) a plurality of PANs in a network system to perform short-range communication, and selecting (S76) at least one PAN according to the monitoring;
generating channel information for the selected PAN and terminal address information including an address of the mobile communication terminal;
transmitting (S78) the generated channel information and the terminal address information to an associated peripheral device;
connecting (S80) with the selected PAN; and
receiving from the peripheral device a join request message, including the address of the mobile communication terminal, in the selected PAN.

2. The method of claim 1, wherein monitoring (S74) the plurality of PANs is achieved while performing short-range communication with another PAN other than the selected PAN.

3. The method of claim 1, wherein the channel information comprises at least one of a channel number including a unique number of the selected channel, a PAN Identification, ID, and a beacon period.

4. The method of claim 1, wherein the peripheral device is any one of a headset, a printer and a Personal Digital Assistant, PDA.

5. The method of claim 1, wherein selecting (S76) at least one PAN comprises:
displaying a result of the monitoring;
receiving a user input for selecting the at least one PAN from the result of the monitoring; and
determining the PAN corresponding to the user input as a PAN to which a node will newly connect.

6. The method of claim 1, further comprises:
releasing the connection with the peripheral device before connecting with the selected PAN.

7. The method of claim 1, wherein the short-range communication comprises at least one of ZigBee, Bluetooth and Ultra Wide Band, UWB.

8. A mobile communication terminal (14) serving as a node terminal in a Personal Area Network, PAN, comprising:
a communication module (30); and
a controller (34) configured to:
monitor (S74) a plurality of PANs in a network
system to perform short-range communication,
select (S76) at least one PAN according to the monitoring,
generate channel information for the selected PAN and terminal address information including an address of the mobile communication terminal,
control the communication module (30) to transmit (S78) the generated channel information and the terminal address information to an associated a peripheral device and to connect (S80) with the selected PAN, and
control the communication module (30) to receive from the peripheral device a join request message, including the address of the mobile communication terminal, in the selected PAN.

9. The mobile communication terminal (14)of claim 8, wherein the controller (34) is further configured to monitor (S74) the plurality of PANs while performing short-range communication with another PAN other than the selected PAN.

10. The mobile communication terminal (14)of claim 8, wherein the channel information comprises at least one of a channel number including a unique number of the selected channel, a PAN Identification, ID, and a beacon period.

11. The mobile communication terminal (14)of claim 8, wherein the peripheral device is any one of a headset, a printer and a Personal Digital Assistant, PDA.

12. The mobile communication terminal (14) of claim 8, further comprises:
a display (26); and
a key input unit (24) configured to receive user inputs; and
wherein the controller is further configured to:
control the display (26) to display a result of the monitoring,
control the key input unit (24) to receive a user input for selecting (S76) at least one PAN from the result of the monitoring, and
determine the PAN corresponding to the user input as a PAN to which a node will newly connect.

13. The mobile communication terminal (14)of claim 8, wherein the controller is further configured to control the communication module (30) to release the connection with the peripheral device before connecting with the selected PAN.

14. The mobile communication terminal (14)of claim 8, wherein the short-range communication comprises at least one of ZigBee, Bluetooth and Ultra Wide Band, UWB.

## Patentansprüche

1. Verfahren in einem mobilen Kommunikationsendgerät (14), das als Knotenendgerät in einem PAN (Personal Area Network) dient, wobei das Verfahren umfasst:
Überwachen (S74) einer Vielzahl von PAN in einem Netzwerksystem zur Ausführung einer Nahbereichskommunikation und Auswählen (S76) mindestens eines PAN entsprechend dem Überwachen;
Erzeugen von Kanalinformationen für das ausgewählte PAN und Endgerätadressinformationen, enthaltend eine Adresse des mobilen Kommunikationsendgeräts;
Übermitteln (S78) der erzeugten Kanalinformationen und der Endgerätadressinformationen an eine zugeordnete Peripherievorrichtung;
Verbinden (S80) mit dem ausgewählten PAN; und
Empfangen von der Peripherievorrichtung einer Verbindungsanfragemitteilung, enthaltend die Adresse des mobilen Kommunikationsendgeräts, im ausgewählten PAN.

2. Verfahren nach Anspruch 1, wobei das Überwachen (S74) der Vielzahl von PAN erreicht wird, während eine Nahbereichskommunikation mit einem anderen PAN als dem ausgewählten PAN ausgeführt wird.

3. Verfahren nach Anspruch 1, wobei die Kanalinformationen mindestens eine einer Kanalnummer, enthaltend eine eindeutige Nummer des ausgewählten Kanals, einer PAN-Identifikation, ID, und einer Signalzeitspanne, umfasst.

4. Verfahren nach Anspruch 1, wobei die Peripherievorrichtung eines eines Headsets, eines Druckers und eines Persönlichen Digitalen Assistenten, PDA, ist.

5. Verfahren nach Anspruch 1, wobei das Auswählen (S76) mindestens eines PANs umfasst:
Anzeigen eines Ergebnisses des Überwachens;
Empfangen einer Nutzereingabe zum Auswählen des mindestens einen PAN aus dem Ergebnis des Überwachens; und
Bestimmen des PAN entsprechend der Nutzereingabe als ein PAN, mit dem sich ein Knoten neu verbinden wird.

6. Verfahren nach Anspruch 1, ferner umfassend:
Freigeben der Verbindung zur Peripherievorrichtung vor dem Verbinden mit dem ausgewählten

7. Verfahren nach Anspruch 1, wobei die Nahbereichskommunikation mindestens eine von ZigBee, Bluetooth und Ultrabreitband (UWB) umfasst.

8. Mobiles Kommunikationsendgerät (14), das als Knotenendgerät in einem PAN (Personal Area Network) dient, umfassend:
ein Kommunikationsmodul (30); und
eine Steuerung (34), konfiguriert, um:
eine Vielzahl von PAN in einem Netzwerksystem zur Durchführung von Nahbereichskommunikation zu überwachen (S74),
mindestens ein PAN entsprechend dem Überwachen auszuwählen (S76),
Kanalinformationen für das ausgewählte PAN und Endgerätadressinformationen zu erzeugen,
enthaltend eine Adresse des mobilen Kommunikationsendgeräts;
das Kommunikationsmodul (30) zu steuern, um die erzeugten Kanalinformationen und die Endgerätadressinformationen an eine zugeordnete Peripherievorrichtung zu übermitteln (S78) und sich mit dem ausgewählten PAN zu verbinden (S80), und
das Kommunikationsmodul (30) zu steuern, um von der Peripherievorrichtung eine Verbindungsanfragemitteilung zu erhalten, enthaltend die Adresse des mobilen Kommunikationsendgeräts im ausgewählten PAN.

9. Mobiles Kommunikationsendgerät (14) nach Anspruch 8, wobei die Steuerung (34) ferner konfiguriert ist, um die Vielzahl von PAN zu überwachen (S74), während eine Nahbereichskommunikation mit einem anderen PAN als dem ausgewählten PAN durchgeführt wird.

10. Mobiles Kommunikationsendgerät (14) nach Anspruch 8, wobei die Kanalinformationen mindestens eine einer Kanalnummer, enthaltend eine eindeutige Nummer des ausgewählten Kanals, eine PAN-Identifikation, ID, und eine Signalzeitspanne, umfasst.

11. Mobiles Kommunikationsendgerät (14) nach Anspruch 8, wobei die Peripherievorrichtung eines eines Headsets, eines Druckers und eines Persönlichen Digitalen Assistenten, PDA, ist.

12. Mobiles Kommunikationsendgerät (14) nach Anspruch 8, ferner umfassend:
eine Anzeige (26); und
eine Tasteneingabeeinheit (24), die konfiguriert ist, um Nutzereingaben zu empfangen; und
wobei die Steuerung ferner konfiguriert ist, um:
die Anzeige (26) zu steuern, um ein Ergebnis des Überwachens anzuzeigen,
die Tasteneingabeeinheit (24) zu steuern, um eine Nutzereingabe zum Auswählen (S76) mindestens eines PAN aus dem Ergebnis des Überwachens zu empfangen, und
das PAN entsprechend der Nutzereingabe als ein PAN zu bestimmen, mit dem sich ein Knoten neu verbinden wird.

13. Mobiles Kommunikationsendgerät (14) nach Anspruch 8, wobei die Steuerung ferner konfiguriert ist, um das Kommunikationsmodul (30) zu steuern, um die Verbindung mit der Peripherievorrichtung vor der Verbindung mit dem ausgewählten PAN freizugeben.

14. Mobiles Kommunikationsendgerät (14) nach Anspruch 8, wobei die Nahbereichskommunikation mindestens eine von ZigBee, Bluethooth und Ultrabreitband (UWB) umfasst.

## Revendications

1. Procédé dans un terminal de communication mobile (14) servant de terminal de noeud dans un réseau personnel (PAN), le procédé comprenant :
la surveillance (S74) d'une pluralité de PAN dans un système de réseau pour effectuer une communication à courte portée, et la sélection (S76) d'au moins un PAN selon la surveillance ;
la génération d'informations de canal pour le PAN sélectionné et d'informations d'adresse de terminal comprenant une adresse du terminal de communication mobile ;
la transmission (S78) des informations de canal générées et des informations d'adresse de terminal à un dispositif périphérique associé ;
la connexion (S80) au PAN sélectionné ; et
la réception en provenance du dispositif périphérique d'un message de demande de rattachement, comprenant l'adresse du terminal de communication mobile, dans le PAN sélectionné.

2. Procédé selon la revendication 1, ladite surveillance (S74) de la pluralité de PAN étant réalisée tout en effectuant une communication à courte portée avec un autre PAN différent du PAN sélectionné.

3. Procédé selon la revendication 1, lesdites informations de canal comprenant au moins l'un d'un numéro de canal comprenant un numéro unique du canal sélectionné, d'un identifiant (ID) de PAN et d'une période de balise.

4. Procédé selon la revendication 1, ledit dispositif périphérique étant un dispositif parmi un casque, une imprimante et un assistant numérique personnel (PDA).

5. Procédé selon la revendication 1, ladite sélection (S76) d'au moins un PAN comprenant :
l'affichage d'un résultat de la surveillance ;
la réception d'une entrée utilisateur pour sélectionner ledit au moins un PAN à partir du résultat de la surveillance ; et
la détermination du PAN correspondant à l'entrée utilisateur comme PAN auquel un noeud se connectera nouvellement.

6. Procédé selon la revendication 1, comprenant en outre :
la libération de la connexion avec le dispositif périphérique avant la connexion au PAN sélectionné.

7. Procédé selon la revendication 1, ladite communication à courte portée comprenant au moins l'une d'une communication ZigBee, d'une communication Bluetooth et d'une communication à bande ultra-large (UWB).

8. Terminal de communication mobile (14) servant de terminal de noeud dans un réseau personnel (PAN) comprenant :
un module de communication (30) ; et
un dispositif de commande (34) configuré pour :
surveiller (S74) une pluralité de PAN dans un système de réseau pour effectuer une communication à courte portée,
sélectionner (S76) au moins un PAN selon la surveillance,
générer des informations de canal pour le PAN sélectionné et des informations d'adresse de terminal comprenant une adresse du terminal de communication mobile,
commander le module de communication (30) pour transmettre (S78) les informations de canal générées et les informations d'adresse de terminal à un dispositif périphérique associé et pour se connecter (S80) au PAN sélectionné, et
commander le module de communication (30) pour recevoir en provenance du dispositif périphérique un message de demande de rattachement, comprenant l'adresse du terminal de communication mobile, dans le PAN sélectionné.

9. Terminal de communication mobile (14) selon la revendication 8, ledit dispositif de commande (34) étant en outre configuré pour surveiller (S74) la pluralité de PAN tout en effectuant une communication à courte portée avec un autre PAN différent du PAN sélectionné.

10. Terminal de communication mobile (14) selon la revendication 8, lesdites informations de canal comprenant au moins l'un d'un numéro de canal comprenant un numéro unique du canal sélectionné, d'un identifiant (ID) de PAN et d'une période de balise.

11. Terminal de communication mobile (14) selon la revendication 8, ledit dispositif périphérique étant un quelconque dispositif parmi un casque, une imprimante et un assistant numérique personnel (PDA).

12. Terminal de communication mobile (14) selon la revendication 8, comprenant en outre :
un écran (26) ; et
une unité d'entrée à touches (24) configurée pour recevoir des entrées utilisateur ; et ledit dispositif de commande étant en outre configuré pour :
commander l'écran (26) pour afficher un résultat de la surveillance,
commander l'unité d'entrée à touches (24) pour recevoir une entrée utilisateur pour sélectionner (S76) au moins un PAN à partir du résultat de la surveillance, et
déterminer le PAN correspondant à l'entrée utilisateur comme PAN auquel un noeud se connectera nouvellement.

13. Terminal de communication mobile (14) selon la revendication 8, ledit dispositif de commande étant en outre configuré pour commander le module de communication (30) pour libérer la connexion avec le dispositif périphérique avant la connexion au PAN sélectionné.

14. Terminal de communication mobile (14) selon la revendication 8, ladite communication à courte portée comprenant au moins l'une d'une communication ZigBee, d'une communication Bluetooth et d'une communication à bande ultra-large (UWB).
